# EUROPEAN PATENT APPLICATION

(11) **EP 4 725 925 A1**
(43) Date of publication of application: **15.04.2026**
(21) Application number: 25828081.7
(22) Date of filing: 15.07.2025
(51) Int. Cl.: C03C 4/04, C03C 3/095, C03C 23/00, C03B 32/02

(54) **METHOD FOR PREPARING PHOTOSENSITIVE GLASS AND USE OF PHOTOSENSITIVE GLASS**

(30) Priority: 19.07.2024 CN 202410975705
(71) Applicant: Chongqing Aureavia Hi-Tech Glass Co., Ltd., Chongqing 400714 (CN)
(72) Inventor: HUANG, Hao, Chongqing 400714 (CN); YIN, Weiwei, Chongqing 400714 (CN); LUO, Site, Chongqing 400714 (CN); TIAN, Qian, Chongqing 400714 (CN)
(74) Representative: Dantz, Dirk
(86) International application number: PCT/CN2025/108683
(87) International publication number: WO 2026/017048

(57) **Abstract**

The examples of the present disclosure provide a preparation method for a photosensitive glass and use thereof. By controlling the preparation method of the photosensitive glass, wherein the preparation method comprises: a substrate glass comprises a first area and a second area, performing masking treatment on both opposite main surfaces of the first area, and the second area not being subjected to masking treatment, to obtain a both sided-masked substrate glass with an identical structure; and performing radiation treatment on both main surfaces of the both sided-masked substrate glass with an identical structure, it can significant improve the edge blurring phenomenon at the edges of the exposed area of the photosensitive glass; and ensuring that the exposed area has good light-shielding performance.

## Description

### CROSS-REFERENCE TO RELATED APPLICATIONS

This disclosure claims priority to Chinese Patent Application No. 202410375705.9, titled "PREPARATION METHOD FOR PHOTOSENSITIVE GLASS AND USE THEREOF" filed before the China National Intellectual Property Administration on July 19, 2024; which is incorporated herein by reference in its entirety.

### TECHNICAL FIELD

The present disclosure relates to the technical field of glass, in particular to a preparation method for a photosensitive glass and use thereof.

### BACKGROUND

In recent years, smartwatches have developed rapidly and become increasingly diverse in function. They are not only capable of detecting step counts but also measuring body fat, blood oxygen, body temperature, heart rate, etc. The realization of all these functions relies entirely on LEDs in the smartwatch back cover emitting light of corresponding wavelengths towards the skin, converting the reflected light into electrical signals, which are then converted into digital signals by corresponding receivers. However, in pursuit of better texture, the smartwatch back covers are typically made of glass materials. But conventional glass, due to its lack of light-shielding properties, can cause interference between light rays emitted by LEDs, resulting in an optical crosstalk phenomenon and affecting the accuracy of detection data.

A photosensitive glass is a Li-Al-Si glass which comprises a photosensitizer. Compared to conventional glass materials, after ultraviolet treatment and heat treatment, the photosensitive glass can form an opaque region in an exposed area. The light transmittance of the exposed area is significantly reduced compared to the non-exposed area, giving the photosensitive glass light-shielding properties. It is expected to replace conventional glass in the smartwatch back cover. However, although there are many reports on the preparation of the photosensitive glass, conventional photosensitive glass is still difficult to achieve the light-shielding performance required for the smartwatch back cover.

Furthermore, during the ultraviolet treatment process of the photosensitive glass, since the ultraviolet light source is difficult to irradiate vertically, there is a certain inclination angle, thereby causing uncontrolled light to irradiate other areas in addition to the intended exposed area, expanding the range of the exposed area of the glass, leading to a blurring or diffusion phenomenon at the edges of the exposed area (hereinafter referred to edge blurring phenomenon).

It should be noted that the content in this part of the present disclosure only provides background information related to the present disclosure and does not necessarily constitute prior art or common general knowledge.

### SUMMARY

An object of the present disclosure is to provide a preparation method for a photosensitive glass, which can achieve the mitigation of edge blurring phenomenon at the edges of the exposed area of the photosensitive glass while simultaneously ensuring that the exposed area has good light-shielding performance.

In order to achieve the above object, the present this disclosure provides the following technical solutions:
A first aspect provides a preparation method for a photosensitive glass, comprising:
obtaining a substrate glass;
the substrate glass comprises a first area and a second area, performing masking treatment on both opposite main surfaces of the first area, and not performing masking treatment on the second area, to obtain a both sided-masked substrate glass with an identical structure; and
performing radiation treatment on both main surfaces of the both sided-masked substrate glass with an identical structure, and subsequently performing heat treatment, to obtain the photosensitive glass having a non-exposed area and an exposed area; wherein the non-exposed area corresponds to the first area, and the exposed area corresponds to the second area.

Optionally, the radiation treatment comprises ultraviolet irradiation treatment.

Optionally, a wavelength of the ultraviolet irradiation treatment is 300 nm to 320 nm, an intensity of the ultraviolet irradiation treatment is 20 mW/cm² to 360 mW/cm², and a time of the ultraviolet irradiation treatment is 5 min to 60 min.

Optionally, the conditions of the radiation treatment on both sides are the same.

Optionally, the conditions of the ultraviolet irradiation treatment on both sides are the same.

Optionally, the masking treatment comprises masking using a masking ink and/or a mask.

Optionally, the masking ink is used to perform the masking treatment on both opposite main surfaces of the first area.

Optionally, the heat treatment comprises nucleation treatment and crystallization treatment.

Optionally, a heating rate of the nucleation treatment is 1 °C/min to 10 °C/min; and/or,
a temperature of the nucleation treatment is 450 C to 590 °C; and/or,
a time of the nucleation treatment is 30 min to 240 min; and/or,
a heating rate of the crystallization treatment is 1 °C/min to 10 °C/min; and/or,
a temperature of the crystallization treatment is higher than that of the nucleation treatment, and the temperature of the crystallization treatment is 590 °C to 800 °C; and/or,
a time of the crystallization treatment is 30 min to 360 min.

Optionally, the substrate glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.18%, and Sb₂O₃: 0.05% to 0.51%, based on a mass percentage of oxides;
wherein X is Ag (silver), Cu (copper), Au (gold), Bi (bismuth) and/or the oxides thereof.

Optionally, the photosensitive glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.18%, and Sb₂O₃: 0.05% to 0.51%, based on the mass percentage of oxides;
wherein X is Ag (silver), Cu (copper), Au (gold), Bi (bismuth) and/or the oxides thereof.

Optionally, the photosensitive glass comprises:
SiO₂ with a content of 73.02%, 69.80%, or 72.40%; and/or,
Al₂O₃ with a content of 7.35%, 8.06%, or 5.87%; and/or,
Li₂O with a content of 7.33%, 9.77%, or 9.80%; and/or,
Na₂O with a content of 2.41%, 2.32%, or 2.84%; and/or,
K₂O with a content of 2.15%, 3.34%, or 2.34%; and/or,
ZrO₂ with a content of 6.71%, 5.54%, or 5.77%; and/or,
Ag₂O with a content of 0.43%, 0.48%, or 0.43%; and/or,
CeO₂ with a content of 0.13%, 0.18%, or 0.12%; and/or,
Sb₂O₃ with a content of 0.47%, 0.50%, or 0.43%, based on the mass percentage of oxides.

A second aspect provides a photosensitive glass, which is prepared by the preparation method according to any one of the embodiments of the first aspect.

Optionally, when a thickness of the photosensitive glass is 0.40 mm to 1.00 mm, a transmittance T₁ of the exposed area of the photosensitive glass at a wavelength of 850 nm is 0.00% to 5.00%, preferably the transmittance T₁ is 0.00% to 3.00%; and/or,
when the thickness of the photosensitive glass is 0.40 mm to 1.00 mm, a transmittance T₂ of the exposed area of the photosensitive glass at a wavelength of 550 nm is 0.00% to 5.00%, preferably the transmittance T₂ is 0.00% to 2.00%; and/or,
when the thickness of the photosensitive glass is 0.40 mm to 1.00 mm, a transmittance T₃ of the non-exposed area of the photosensitive glass at a wavelength of 850 nm is greater than or equal to 90%; and/or,
when the thickness of the photosensitive glass is 0.40 mm to 1.00 mm, a transmittance T₄ of the non-exposed area of the photosensitive glass at a wavelength of 550 nm is greater than or equal to 90%.

A third aspect provides a cover plate glass, wherein the cover plate glass is made of the photosensitive glass according to any one of the embodiments of the second aspect.

A fourth aspect provides an electronic device, wherein the electronic device comprises the photosensitive glass according to any one of the embodiments of the second aspect.

Optionally, the electronic device comprises a housing assembled on the outside of the electronic device, and the housing comprises the photosensitive glass according to any one of the embodiments of the second aspect.

Optionally, the electronic device further comprises a camera component located inside the housing, the housing comprises a camera protection cover plate, the camera protection cover plate is disposed over the camera component, and the camera protection cover plate comprises the photosensitive glass according to any one of the embodiments of the second aspect.

A fifth aspect provides use of the photosensitive glass according to any one of the embodiments of the second aspect in a component for a mobile phone, a smartwatch, a wearable device, a camera module, or a vehicle.

One or more of the above technical solutions provided in the present disclosure, compared with the prior art, comprise the following advantages:
the present disclosure controls and improves the preparation process of the photosensitive glass, by performing masking treatment on both opposite main surfaces of the first area of the substrate glass, and not performing masking treatment on the second, followed by performing radiation treatment on both main surfaces, it can significantly migigate the edge blurring phenomenon at the edges of the photosensitive glass. In addition, by controlling the time and intensity of the radiation treatment, it can suppress the occurrence of a hollow transparent region in the exposed area of the photosensitive glass; thereby, a photosensitive glass with good light-shielding performance in the exposed area can be prepared.

### BRIEF DESCRIPTION OF THE DRAWINGS

In order to illustrate the technical solutions of the examples of the present disclosure more clearly, the drawings required for describing the examples will be briefly introduced below. It should be understood that the following drawings show only some examples of the present disclosure and therefore should not be considered as limiting the scope. For those of ordinary skill in the art, other related drawings can be obtained based on these drawings without creative effort.
FIG. 1 is a structural schematic diagram of a substrate glass after masking using masking ink provided in an embodiment of the present disclosure.
FIG. 2 is a structural schematic diagram of a photosensitive glass provided in an embodiment of the present disclosure.
FIG. 3 is a rear structural schematic diagram of an electronic device mentioned in an embodiment of the present disclosure.
FIG. 4 is a structural schematic diagram of an electronic device as a smartwatch mentioned in an embodiment of the present disclosure.
FIG. 5(b) is a schematic diagram of a production process flow provided in an embodiment of the present disclosure, and FIG. 5(a) is a schematic diagram of a production process flow provided in Comparative Example 1.
FIG. 6 is a schematic diagram of a production process flow provided in Comparative Example 2 of the present disclosure.
FIG. 7 is a cross-sectional schematic diagram of a photosensitive glass after cutting provided in Example 3 of the present disclosure.
FIG. 8 is a cross-sectional schematic diagram of a photosensitive glass after cutting provided in Comparative Example 1 of the present disclosure.
FIG. 9 is a cross-sectional schematic diagram of a photosensitive glass after cutting provided in Comparative Example 3 of the present disclosure.
FIG. 10 is a diagram showing the blurring at the edges of the main surface observed using a polarizing microscope in Comparative Example 1 of the present disclosure.

Reference numerals: 11 - light-transmitting area; 12 - light-shielding area; 21 - exposed area; 22 - non-exposed area; 31 - camera protection cover plate; 32 - camera component; 33 - back cover; 41 - back cover of smartwatch; 51 - mask; 51 - mask on upper main surface; 61 - masking ink on upper main surface; 62 - masking ink on lower main surface; 71/81/91 - cross-section of exposed area.

### DETAILED DESCRIPTION

The embodiments of the present disclosure will be described in detail below with reference to examples, but those skilled in the art will understand that the following examples are only configured to illustrate the present disclosure and should not be considered as limiting the scope of the present disclosure. If specific conditions are not indicated in the examples, they are performed under conventional conditions or under the conditions recommended by the manufacturer. If the manufacturer of a reagent or instrument is not indicated, it is a conventional product that is commercially available.

The endpoints and any values of the ranges disclosed herein are not limited to the precise ranges or values, and these ranges or values should be understood to comprise values close to these ranges or values. For numerical ranges, the endpoint values of each range, the endpoint values of each range and separate point values, and separate point values can be combined with each other to obtain one or more new numerical ranges, which should be considered as specifically disclosed herein. Among them, the terms "optional" and "optionally" both mean that they may be comprised or may not be comprised (or may exist or may not exist). The term "and/or" as used herein is inclusive, for example, "A and/or B" means only A, or only B, or both A and B.

### Term Explanation and Test Methods:

In the present disclosure, the main surface refers to the surface with the largest area, for example, the upper surface or lower surface of a horizontally placed substrate glass.

In the present disclosure, the thickness of the glass was tested by a micrometer.

In the present disclosure, the size specifications of the glass sheet were tested using a 2D video measuring machine (instrument model Miyu MY-YXCL-4030).

In the present disclosure, an ultraviolet-visible spectrophotometer was used to test the transmittance of the exposed area and the non-exposed area of the photosensitive glass. The ultraviolet-visible spectrophotometer used for testing in the present disclosure was Shimadzu's UV-2000 ultraviolet-visible spectrophotometer.

The specific method for testing the exposed area of the photosensitive glass was as follows: First, a jig with the same shape and size as the photosensitive glass, where the corresponding area of the exposed area of the photosensitive glass was a hollowed-out area and the corresponding area of the non-exposed area of the photosensitive glass was a light-proof area, and the connection position between the hollowed-out area and the light-proof area was light-proof, was used as a blank sample for test calibration. Then, the exposed area of the photosensitive glass was cut into a sample that coincided with the shape of the hollowed-out area of the jig and placed into the hollowed-out area of the aforementioned jig for testing to obtain the transmittance. The ultraviolet-visible spectrophotometer was used to test the transmittance of the exposed area of five pieces of the photosensitive glass from the same batch to light of different wavelengths, and then the average value was taken, which was recorded as the transmittance result of the exposed area of the photosensitive glass at that wavelength of light.

In addition, the ultraviolet-visible spectrophotometer was used to test the transmittance of the non-exposed area of five pieces of the photosensitive glass from the same batch to light of different wavelengths. The average value of the transmittance measured for the non-exposed areas of the five pieces of the photosensitive glass at different wavelengths of light was taken, and recorded as the transmittance result of the non-exposed area of the photosensitive glass at that wavelength of light.

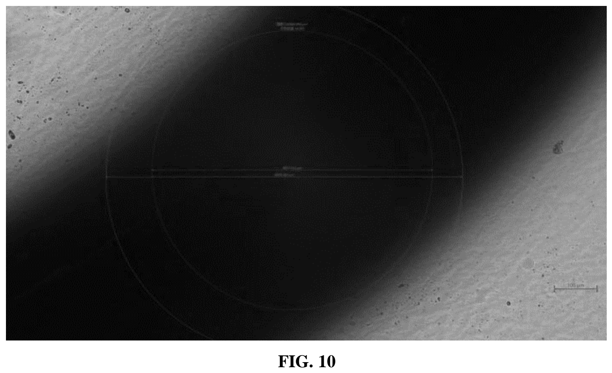

In the present disclosure, the phenomenon where an obvious light halo appears at the edge of the exposed area of the photosensitive glass is referred as blurring at the edges, see FIG. 10.

In some embodiments of the present disclosure, a preparation method for a photosensitive glass is provided, comprising:
obtaining a substrate glass;
the substrate glass comprises a first area and a second area, performing masking treatment on both opposite main surfaces of the first area, and not performing masking treatment on the second area, to obtain a both sided-masked substrate glass with an identical structure; and
performing radiation treatment on both main surfaces of the both sided-masked substrate glass with an identical structure, and subsequently performing heat treatment, to obtain the photosensitive glass having a non-exposed area and an exposed area; wherein the non-exposed area corresponds to the first area, and the exposed area corresponds to the second area. In the present disclosure, the both sided-masked substrate glass with an identical structure means that the masking structure on both sides of the substrate glass is the same.

In the present disclosure, an molding method in the prior art can be used to prepare the substrate glass, and the present disclosure imposes no limitation on this, for example, the molding method for the substrate glass may include but is not limited to float process, overflow process, rolling process, or casting process. By way of example, according to the formula, each component was mixed uniformly, melted and formed, then cooled and annealed to obtain the substrate glass.

By way of example, the raw materials (industrial conventional raw materials) were proportioned according to the formula ratio, a clarifying agent was added, and then mixed for a period of time to obtain a uniformly mixed raw material mixture. The raw material mixture was placed in a platinum crucible, heated to 1250 °C to 1680 °C, preferably the melting temperature was 1480 °C to 1680 °C, and preferably maintained at this temperature for 3 to 12 hours. Then it was poured into a molding mold for cooling and shaping, preferably cooled to 750 °C to 1000 °C, then placed in an annealing furnace for annealing treatment, preferably the annealing temperature was 400 °C to 650 °C, preferably the annealing time was 10 to 48 hours; thereafter, it was cooled to room temperature along with the annealing furnace to obtain the substrate glass. Those skilled in the art can select the type and amount of the clarifying agent according to requirements without creative effort. Furthermore, the clarifying agent may include, but is not limited to, one or more selected from the group consisting of sodium chloride, tin oxide, antimony oxide, arsenic oxide, and the like. The addition amount of the clarifying agent may be 0 wt% to 1 wt% of the total amount of raw materials.

In some embodiments of the present disclosure, the radiation treatment comprises ultraviolet irradiation treatment.

In the present disclosure, the intensity of the ultraviolet irradiation treatment and the time of the ultraviolet irradiation treatment are not particularly limited and depend on the composition of the photosensitive glass and the light-proof effect of the exposed area, as long as the photosensitive glass of the present disclosure is satisfied. In some embodiments of the present disclosure, the wavelength of the ultraviolet irradiation treatment is 300 nm to 320 nm, the intensity of the ultraviolet irradiation treatment is 20 mW/cm² to 360 mW/cm², and the time of the ultraviolet irradiation treatment is 5 min to 60 min.

In some embodiments of the present disclosure, the conditions for the radiation treatment on both sides are the same.

In some embodiments of the present disclosure, the conditions for the ultraviolet irradiation treatment on both sides are the same.

In some embodiments of the present disclosure, the wavelength of the ultraviolet irradiation treatment is 300 nm, 302 nm, 305 nm, 308 nm, 310 nm, 312 nm, 315 nm, 317 nm, or 320 nm, or a value within the numerical range formed by any two of the above specific values as endpoints. In some embodiments of the present disclosure, the intensity of the ultraviolet irradiation treatment is 20 mW/cm², 40 mW/cm², 60 mW/cm², 80 mW/cm², 100 mW/cm², 120 mW/cm², 150 mW/cm², 180 mW/cm², 200 mW/cm², 210 mW/cm², 220 mW/cm², 230 mW/cm², 240 mW/cm², 250 mW/cm², 260 mW/cm², 270 mW/cm², 280 mW/cm², 290 mW/cm², 300 mW/cm², 310 mW/cm², 320 mW/cm², 330 mW/cm², 340 mW/cm², 350 mW/cm², or 360 mW/cm², or a value within the numerical range formed by any two of the above specific values as endpoints. In some embodiments of the present disclosure, the time of the ultraviolet irradiation treatment is 5 min, 10 min, 15 min, 20 min, 25 min, 30 min, 35 min, 40 min, 45 min, 50 min, 55 min, or 60 min, or a value within the numerical range formed by any two of the above specific values as endpoints. It should be understood that, in specific embodiments, any of the above ranges can be combined with any other range, as long as the photosensitive glass with the required properties of the present disclosure can be obtained.

In some embodiments of the present disclosure, the masking treatment comprises masking using a masking ink and/or a mask.

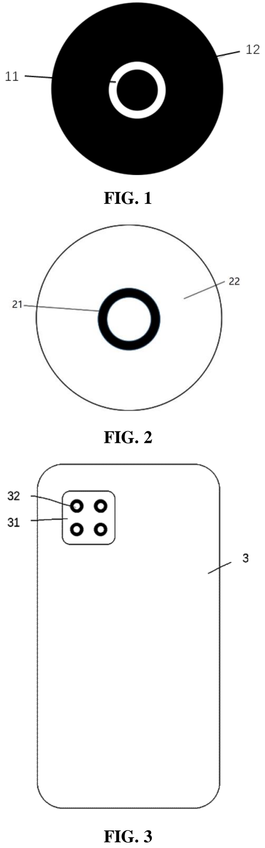

By way of example, a structural schematic diagram of the substrate glass after masking using masking ink is shown in FIG. 1, the composite circular hole has a light-transmitting area 11 corresponding to the inner diameter and a light-shielding area 12 corresponding to the area other than the inner diameter; a structural schematic diagram of the corresponding formed photosensitive glass is shown in FIG. 2, wherein the position corresponding to the light-transmitting area 11 forms the exposed area 21, and the position corresponding to the light-shielding area 12 forms the non-exposed area 22. In some embodiments of the present disclosure, the heat treatment comprises nucleation treatment and crystallization treatment.

In some embodiments of the present disclosure, the temperature of the nucleation treatment may be 450 °C to 590 °C. In some embodiments of the present disclosure, the temperature of the nucleation treatment may be 450 °C, 480 °C, 500 °C, 520 °C, 540 °C, 550 °C, 560 °C, 570 °C, 580 °C, or 590 °C, or a value within the numerical range formed by any two of the above specific values as endpoints. In some embodiments of the present disclosure, the time of the nucleation treatment is 30 min to 240 min. In some embodiments of the present disclosure, the time of the nucleation treatment may be 30 min, 45 min, 50 min, 55 min, 60 min, 90 min, 100 min, 120 min, 140 min, 150 min, 160 min, 170 min, 180 min, 190 min, 200 min, 220 min, or 240 min, or a value within the numerical range formed by any two of the above specific values as endpoints. In some embodiments of the present disclosure, the heating rate of the nucleation treatment is 1 °C/min to 10 °C/min. In some embodiments of the present disclosure, the heating rate of the nucleation treatment may be 1 °C/min, 2 °C/min, 3 °C/min, 4 °C/min, 5 °C/min, 6 °C/min, 7 °C/min, 8 °C/min, 9 °C/min, or 10 °C/min, or a value within the numerical range formed by any two of the above specific values as endpoints. It should be understood that, in specific embodiments, any of the above ranges can be combined with any other range, as long as the photosensitive glass with the required properties of the present disclosure can be obtained.

In some embodiments of the present disclosure, the temperature of the crystallization treatment is 590 °C to 800 °C and/or the time of the crystallization treatment is 30 min to 360 min. In some embodiments of the present disclosure, the temperature of the crystallization treatment may be 590 °C, 600 °C, 620 °C, 640 °C, 650 °C, 660 °C, 670 °C, 680 °C, 700 °C, 720 °C, 740 °C, 760 °C, 780 °C, or 800 °C, or a value within the numerical range formed by any two of the above specific values as endpoints. In some embodiments of the present disclosure, the time of the crystallization treatment may be 30 min, 50 min, 60 min, 80 min, 90 min, 100 min, 120 min, 140 min, 160 min, 180 min, 200 min, 240 min, 260 min, 280 min, 300 min, 320 min, or 360 min, or a value within the numerical range formed by any two of the above specific values as endpoints. It should be understood that, in embodiments, any of the above ranges can be combined with any other range.

Before and/or after the heat treatment, those skilled in the art may also perform other conventional steps to obtain the photosensitive glass sample that meets the required specifications or requirements, for example, shaping treatment, cutting treatment (such as using a multi-wire saw for cutting), CNC (computer numerical control) processing treatment, thinning treatment, or polishing treatment steps, etc. There is no limitation in the present disclosure on the dimensional processing of the substrate glass or the photosensitive glass, for example, it may be 50 mm × 50 mm × 1.0 mm, 300 mm × 120 mm ×0.7 mm, etc.

In some embodiments of the present disclosure, a photosensitive glass is provided, which is prepared by the above preparation method.

In some embodiments of the present disclosure, the composition of the substrate glass is the same as or substantially the same as the composition of the photosensitive glass, based on the mass percentage of oxides.

In some embodiments of the present disclosure, the substrate glass or the photosensitive glass comprises the following components: SiO₂: 65.00% to 75.00%; Al₂O₃: 5.00% to 10.00%; Li₂O: 7.00% to 13.00%; Na₂O: 2.00% to 4.00%; K₂O: 2.00% to 4.00%; ZrO₂: 5.00% to 7.00%; CeO₂: 0.05% to 0.18%; Sb₂O₃: 0.05% to 0.51%; and X: 0.05% to 0.80%, based on the mass percentage of oxides;
wherein X is Ag (silver), Cu (copper), Au (gold), Bi (bismuth) and/or the oxides thereof. It should be noted that X being Ag, Cu, Au, Bi and/or the oxides thereof means that X is at least one selected from the group consisting of Ag, Cu, Au, Bi, Ag₂O, CuO, Au₂O₃, and Bi₂O₃.

In the present disclosure, SiO₂ is a glass-forming oxide. It forms an irregular continuous network with structural units of silicon-oxygen tetrahedra, which serves as the skeleton for glass formation. In some embodiments of the present disclosure, the content of SiO₂ in the substrate glass or the photosensitive glass is 65.00% to 75.00%; preferably 65.00% to 73.00%, based on the mass percentage of oxides. In some embodiments of the present disclosure, the content of SiO₂ in the substrate glass or the photosensitive glass may be 65.00%, 66.00%, 67.00%, 68.00%, 69.00%, 70.00%, 71.00%, 72.00%, 73.00%, 74.00%, or 75.00%, or a value within the numerical range formed by any two of the above specific values as endpoints, based on the mass percentage of oxides. It should be understood that, in embodiments, any of the above ranges can be combined with any other range.

In some embodiments of the present disclosure, the content range of Al₂O₃ in the substrate glass or the photosensitive glass is 5.00% to 10.00%, based on the mass percentage of oxides. In some embodiments of the present disclosure, the content of Al₂O₃ in the substrate glass or the photosensitive glass may be: 5.00%, 6.00%, 7.00%, 8.00%, 9.00%, or 10.00%, or a value within the numerical range formed by any two of the above specific values as endpoints, based on the mass percentage of oxides. It should be understood that, in embodiments, any of the above ranges can be combined with any other range.

In some embodiments of the present disclosure, the content of Li₂O in the substrate glass or the photosensitive glass is 7.00% to 13.00%, based on the mass percentage of oxides. In some embodiments of the present disclosure, the content of Li₂O in the substrate glass or the photosensitive glass may be 7.00%, 7.50%, 8.00%, 8.50%, 9.00%, 10.00%, 10.50%, 11.00%, 11.50%, 12.00%, 12.50%, or 13.00%, or a value within the numerical range formed by any two of the above specific values as endpoints, based on the mass percentage of oxides. It should be understood that, in embodiments, any of the above ranges can be combined with any other range.

In some embodiments of the present disclosure, the content of Na₂O in the substrate glass or the photosensitive glass is 2.00% to 4.00%, based on the mass percentage of oxides. In some embodiments of the present disclosure, the content of Na₂O in the substrate glass or the photosensitive glass may be 2.00%, 2.50%, 3.00%, 3.50%, or 4.00%, or a value within the numerical range formed by any two of the above specific values as endpoints, based on the mass percentage of oxides. It should be understood that, in embodiments, any of the above ranges can be combined with any other range.

In some embodiments of the present disclosure, the content of K₂O in the substrate glass or the photosensitive glass is 2.00% to 4.00%, based on the mass percentage of oxides. In some embodiments of the present disclosure, the content of K₂O in the substrate glass or the photosensitive glass may be 2.00%, 2.50%, 3.00%, 3.50%, or 4.00%, or a value within the numerical range formed by any two of the above specific values as endpoints, based on the mass percentage of oxides. It should be understood that, in embodiments, any of the above ranges can be combined with any other range.

In some embodiments of the present disclosure, the content of ZrO₂ in the substrate glass or the photosensitive glass is 5.00% to 7.00%, based on the mass percentage of oxides. In some embodiments of the present disclosure, the content of ZrO₂ in the substrate glass or the photosensitive glass may be 5.00%, 5.50%, 6.00%, 6.50%, or 7.00%, or a value within the numerical range formed by any two of the above specific values as endpoints, based on the mass percentage of oxides. It should be understood that, in embodiments, any of the above ranges can be combined with any other range.

In some embodiments of the present disclosure, the content of X in the substrate glass or the photosensitive glass is 0.05% to 0.80%, based on the mass percentage of oxides; wherein X is Ag, Cu, Au, Bi and/or the oxides thereof. In some embodiments of the present disclosure, the content of X in the substrate glass or the photosensitive glass may be 0.05%, 0.10%, 0.15%, 0.20%, 0.25%, 0.30%, 0.40%, 0.50%, 0.60%, 0.70%, or 0.80%; or a value within the numerical range formed by any two of the above specific values as endpoints, based on the mass percentage of oxides. It should be understood that, in embodiments, any of the above ranges can be combined with any other range.

In some embodiments of the present disclosure, the content of CeO₂ in the substrate glass or the photosensitive glass is 0.05% to 0.18%, based on the mass percentage of oxides. In some embodiments of the present disclosure, the content of X in the substrate glass or the photosensitive glass may be 0.05%, 0.10%, 0.15%, or 0.18%; or a value within the numerical range formed by any two of the above specific values as endpoints, based on the mass percentage of oxides. It should be understood that, in embodiments, any of the above ranges can be combined with any other range.

In some embodiments of the present disclosure, the content of Sb₂O₃ in the substrate glass or the photosensitive glass is 0.05% to 0.51%, based on the mass percentage of oxides. In some embodiments of the present disclosure, the content of Sb₂O₃ in the substrate glass or the photosensitive glass may be 0.05%, 0.10%, 0.15%, 0.20%, 0.25%, 0.30%, 0.35%, 0.40%, 0.45%, 0.50%, or 0.51%; or a value within the numerical range formed by any two of the above specific values as endpoints, based on the mass percentage of oxides. It should be understood that, in embodiments, any of the above ranges can be combined with any other range.

In some embodiments of the present disclosure, when the thickness of the photosensitive glass is 0.40 mm to 1.00 mm, the transmittance T₁ of the exposed area of the photosensitive glass at a wavelength of 850 nm is 0.00% to 5.00%, preferably the transmittance T₁ is 0.00% to 3.00%. In some embodiments of the present disclosure, when the thickness of the photosensitive glass is 0.40 mm to 1.00 mm, the transmittance T₁ of the exposed area of the photosensitive glass at a wavelength of 850 nm may be 0.00%, 0.21%, 0.50%, 0.70%, 0.90%, 1.00%, 1.25%, 1.35%, 1.50%, 1.70%, 2.00%, 2.51%, 3.00%, 3.50%, 4.00%, 4.50%, 4.80%, or 5.00%; or a value within the numerical range formed by any two of the above specific values as endpoints. It should be understood that, in embodiments, any of the above ranges can be combined with any other range.

In some embodiments of the present disclosure, when the thickness of the photosensitive glass is 0.40 mm to 1.00 mm, the transmittance T₂ of the exposed area of the photosensitive glass at a wavelength of 550 nm is 0.00% to 5.00%, preferably the transmittance T₂ is 0.00% to 2.00%. In some embodiments of the present disclosure, when the thickness of the photosensitive glass is 0.40 mm to 1.00 mm, the transmittance T₂ of the exposed area of the photosensitive glass at a wavelength of 550 nm may be 0.00%, 0.20%, 0.50%, 0.70%, 0.90%, 1.00%, 1.35%, 1.50%, 1.70%, 2.00%, 2.50%, 3.00%, 3.50%, 4.00%, 4.20%, 4.50%, 4.90%, or 5.00%; or a value within the numerical range formed by any two of the above specific values as endpoints. It should be understood that, in embodiments, any of the above ranges can be combined with any other range.

In some embodiments of the present disclosure, when the thickness of the photosensitive glass is 0.40 mm to 1.00 mm, the transmittance T₃ of the non-exposed area of the photosensitive glass at a wavelength of 850 nm is greater than or equal to 90%. In some embodiments of the present disclosure, when the thickness of the photosensitive glass is 0.40 mm to 1.00 mm, the transmittance T₃ of the non-exposed area of the photosensitive glass at a wavelength of 850 nm may be 90.00%, 90.50%, 91.00%, 91.47%, 91.49%, 91.66%, 92.00%, 91.75%, 91.39%, 92.08%, or 95.00%; or a value within the numerical range formed by any two of the above specific values as endpoints. It should be understood that, in embodiments, any of the above ranges can be combined with any other range.

In some embodiments of the present disclosure, when the thickness of the photosensitive glass is 0.40 mm to 1.00 mm, the transmittance T₄ of the non-exposed area of the photosensitive glass at a wavelength of 550 nm is greater than or equal to 90%. In some embodiments of the present disclosure, when the thickness of the photosensitive glass is 0.40 mm to 1.00 mm, the transmittance T₄ of the non-exposed area of the photosensitive glass at a wavelength of 550 nm may be 90.00%, 90.50%, 91.00%, 91.47%, 91.49%, 91.66%, 92.00%, 91.75%, 91.39%, 92.08%, 93.00%, or 95.00%, or a value within the numerical range formed by any two of the above specific values as endpoints. It should be understood that, in embodiments, any of the above ranges can be combined with any other range.

In some embodiments of the present disclosure, the thickness of the photosensitive glass of the present disclosure is not particularly limited, for example, it may be 0.4 mm to 2.0 mm; preferably 0.4 mm to 1.0 mm. In some embodiments of the present disclosure, the thickness of the photosensitive glass of the present disclosure may be 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, or 2.0 mm, or a value within the numerical range formed by any two of the above specific values as endpoints. It should be understood that, in embodiments, any of the above ranges can be combined with any other range.

A second aspect provides a strengthened glass, wherein the strengthened glass is obtained by chemically strengthening the photosensitive glass prepared by the above preparation method.

In the present disclosure, chemical strengthening can be performed by a known method in the art. For example, chemical strengthening comprises single-step chemical strengthening or multi-step chemical strengthening.

In some embodiments of the present disclosure, single-step chemical strengthening uses a salt bath comprising NaNO₃; preferably the content of NaNO₃ in the salt bath is 30 wt% to 100 wt%; preferably, single-step chemical strengthening uses a mixed salt bath comprising NaNO₃ and KNO₃, preferably the content of KNO₃ in the mixed salt bath is 80 wt% to 100 wt%, and the content of NaNO₃ is 0 wt% to 20 wt%.

In some embodiments of the present disclosure, the temperature of single-step chemical strengthening is 380 °C to 480 °C; preferably, the ion exchange time of single-step chemical strengthening is 5 hours to 10 hours.

In some embodiments of the present disclosure, multi-step chemical strengthening comprises two-step chemical strengthening, wherein, the first step of chemical strengthening uses a salt bath comprising NaNO₃, preferably the content of NaNO₃ is 30 wt% to 100 wt%; and the second step of chemical strengthening uses a salt bath comprising KNO₃, preferably the content of KNO₃ is 60 wt% to 100 wt%.

In some embodiments of the present disclosure, the temperature of the first step of chemical strengthening is 380 °C to 480 °C, preferably the time of the first step of chemical strengthening is 3 hours to 10 hours; and/or, the temperature of the second step of chemical strengthening is 380 °C to 480 °C, preferably the time of the second step of chemical strengthening is 1 hour to 5 hours.

The photosensitive glass and the strengthened glass provided by the present disclosure can be used in electronic devices, including but not limited to mobile phones, tablet computers, handheld game consoles, portable digital devices (such as digital cameras), smart home devices, smart wearable devices (e.g., smart bracelets, smartwatches, smart glasses), can also be used in vehicles, aircraft or vessels, and can also be used in any glass devices requiring the photosensitive glass. For example, they can be used in mobile phone back cover glass, smartwatch back cover glass, and the like; for example, they can be used for windshields of vehicles, aircraft or vessels, such as front windshields or side windshields. By way of example, the photosensitive glass provided by the present disclosure can be used to manufacture glass devices. The glass devices referred to here can be regular or irregular, and those skilled in the art can manufacture them according to needs.

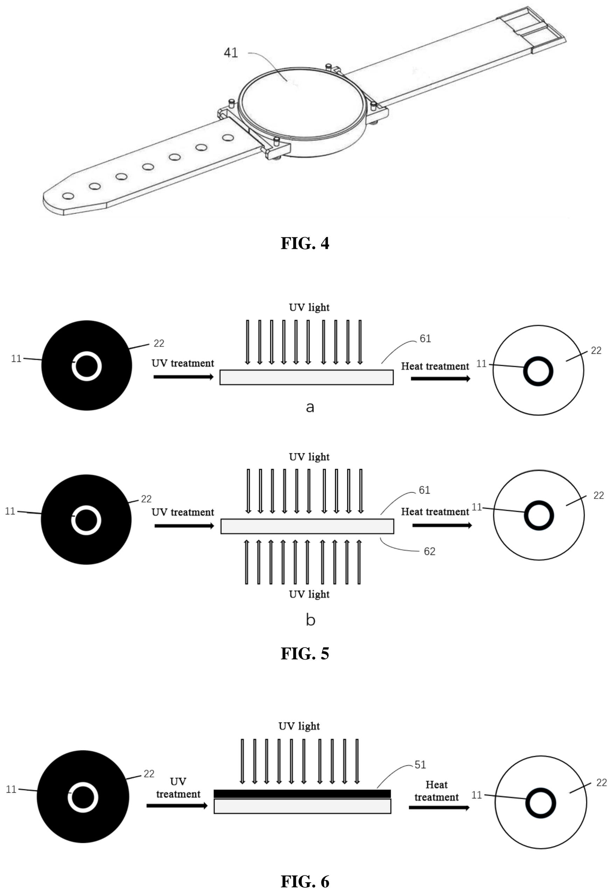

By way of example, the photosensitive glass provided by the present disclosure can be used to manufacture cover plate glass, and the cover plate glass can be a back cover plate or a camera protection cover plate of an electronic device such as a mobile phone. By way of example, the photosensitive glass with excellent performance provided by the present disclosure can be used in electronic devices. Referring to FIG. 3 and FIG. 4, in some embodiments of the present disclosure, an electronic device is provided, which can be a mobile phone (as shown in FIG. 3, the photosensitive glass can serve as the back cover of the mobile phone), or a tablet computer, a smart wearable device (as shown in FIG. 4, the photosensitive glass can serve as the back cover 41 of the smartwatch), and the like, the electronic device comprises the photosensitive glass. In some embodiments of the present disclosure, as shown in FIG. 3, the electronic device further comprises a camera component 32 located inside the housing, the housing may comprise a camera protection cover plate 31, the camera protection cover plate 31 is disposed over the camera component 32 and is configured to protect the camera component 32, and the camera protection cover plate 31 uses the aforementioned photosensitive glass. In some embodiments of the present disclosure, the camera protection cover plate 31 may partially use the aforementioned photosensitive glass, or may entirely use the aforementioned photosensitive glass. In some embodiments of the present disclosure, the setting position of the camera protection cover plate 31 is determined according to the setting position of the camera component 32, and it may be located on the front side or the rear side of the electronic device. In some embodiments of the present disclosure, the camera protection cover plate 31 may be a separate structure from the back cover 33. In some other embodiments of the present disclosure, the camera protection cover plate 31 may also be an integrated structure with the back cover 33.

The technical solutions of the present disclosure will be further described in detail below with reference to examples. The examples of the present disclosure described in detail below are exemplary and are only configured to explain the present disclosure and should not be construed as limiting the present disclosure.

### Example 1

A preparation method for a photosensitive glass, comprising the following steps:
Step 1: Various raw materials (industrial conventional raw materials) were proportioned according to the component ratios in Table 1, the total mass of the configured raw materials was 2000 g. 10 g of the clarifying agent sodium chloride was added to the configured raw materials, and then they were mixed for 30 minutes using a V-type mixer to obtain a uniformly mixed raw material mixture;
the raw material mixture was transferred to a melting furnace, then melted at a temperature of 1450 °C, the melt was stirred with a platinum stirring rod, the melting time was 10 hours, subsequently drawn and formed, and continuously drawn into a glass brick of the required specifications. The glass brick was quickly placed into an annealing furnace at 500 °C and maintained for 6 hours, then naturally cooled to room temperature to obtain a substrate glass brick;
the obtained substrate glass brick was subjected to sequential cold processing treatments of cutting, CNC machining (the CNC instrument model used in the present disclosure is: RCG500S), and polishing, to prepare substrate glass with dimensions of 50 mm × 50 mm × 1.0 mm;
Step 2: The substrate glass obtained above was sequentially subjected to ultrasonic cleaning in deionized water, anhydrous ethanol, propanol, and deionized water for 10 min each, then dried in a drying oven;
after cleaning, masking ink was applied to identical localized areas on the upper and lower main surfaces of the substrate glass, as shown in FIG. 1, the black areas are the masked areas; subsequently, both-sided irradiation treatment was performed under parallel ultraviolet light with a wavelength of 310 nm (UVHX800*850 drawer type) for a total of 25 min, the intensity of the irradiation treatment was 120 mW/cm²;
the UV-irradiated glass was subjected to heat treatment according to the heat treatment process in Table 1 to obtain a photosensitive glass; the heat treatment comprised nucleation treatment and crystallization treatment; the heating rates of both nucleation treatment and crystallization treatment were 10 °C/min; the above photosensitive glass was sequentially subjected to cold processing treatments such as laser cutting, splitting, polishing, and chamfering to obtain a photosensitive glass with dimensions of Φ30*1.0 mm, as shown in the physical image in FIG. 2.

### Example 2

The procedure was carried out with reference to Example 1, with the differences being that the raw material composition, the masking treatment method, and the time of the ultraviolet irradiation treatment of Example 2 were different as shown in Table 1, respectively.

### Example 3

The procedure was carried out with reference to Example 1, with the differences being that the raw material composition and the time of the ultraviolet irradiation treatment of Example 3 were different as shown in Table 1.

### Example 4

The procedure was carried out with reference to Example 1, with the differences being that the raw material composition and the process parameters of the ultraviolet irradiation of Example 4 were different as shown in Table 1.

### Comparative Examples 1-2

The procedure was carried out with reference to Example 3, with the differences being that the masking treatment methods and the areas of the ultraviolet irradiation treatment of Comparative Examples 1-2 were different as shown in Tables 1-2, respectively.

### Comparative Examples 3-4

The procedure was carried out with reference to Example 3, with the differences being that the process parameters of the ultraviolet irradiation of Comparative Examples 3-4 were different as shown in Tables 1-2.

Among them, the process flow diagrams for Examples 1-4 and Comparative Examples 3-4 are shown in FIG. 5(b), the process flow diagram for Comparative Example 1 is shown in FIG. 5(a), and the process flow diagram for Comparative Example 2 is shown in FIG. 6. Among them, 61 denotes masking ink on upper main surface; 62 denotes masking ink on lower main surface, and 51 denotes mask on upper main surface.

Relevant performance tests were conducted on Examples 1-4 and Comparative Examples 1-4, and the results are shown in Tables 1-2.

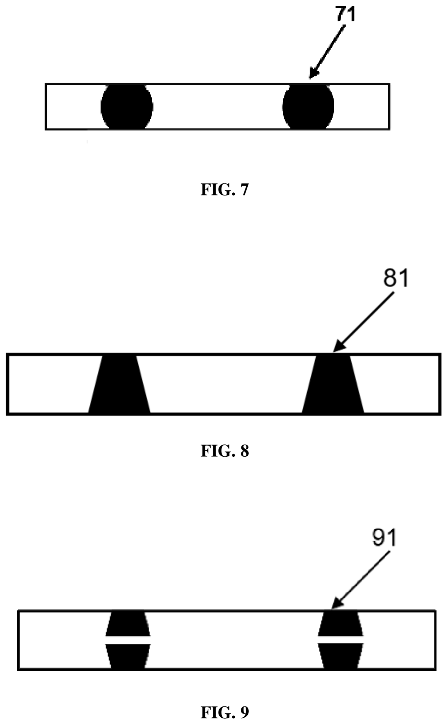

Example 3, Comparative Example 1, and Comparative Example 3 were respectively cut at the cross-section using a laser cutting machine. The cross-sectional schematic diagram of Example 3 is shown in FIG. 7, the cross-section 71 of the exposed area of Example 3 is solid and its contour is slightly curved; the cross-sectional schematic diagram of Comparative Example 1 is shown in FIG. 8; the cross-section 81 of the exposed area of Comparative Example 1 is solid but its contour is trapezoidal; the cross-sectional schematic diagram of Comparative Example 3 is shown in FIG. 9, the cross-section 91 of the exposed area of Comparative Example 3 is partially hollow but the contour of its solid part is slightly curved.

FIG. 10 is a diagram showing the blurring at the edges of the main surface observed using a polarizing microscope in Comparative Example 1 of the present disclosure, from which it can be seen that Comparative Example 1 produced blurring at the edges.

**Table 1**

| Composition (wt%) | Example 1 | Example 2 | Example 3 | Example 4 |
|---|---|---|---|---|
| SiO₂ | 73.02 | 69.80 | 72.40 | 72.40 |
| Al₂O₃ | 7.35 | 8.06 | 5.87 | 5.87 |
| Li₂O | 7.33 | 9.77 | 9.80 | 9.80 |
| Na₂O | 2.41 | 2.32 | 2.84 | 2.84 |
| K₂O | 2.15 | 3.34 | 2.34 | 2.34 |
| ZrO₂ | 6.71 | 5.54 | 5.77 | 5.77 |
| Ag₂O | 0.43 | 0.48 | 0.43 | 0.43 |
| CeO₂ | 0.13 | 0.18 | 0.12 | 0.12 |
| Sb₂O₃ | 0.47 | 0.51 | 0.43 | 0.43 |
| Total | 100.00 | 100.00 | 100.00 | 100.00 |
| Masking treatment | Masking ink on both sides | Mask on both sides | Masking ink on both sides | Masking ink on both sides |
| Area of ultraviolet irradiation | Irradiation on both sides | Irradiation on both sides | Irradiation on both sides | Irradiation on both sides |
| Intensity of ultraviolet irradiation treatment mW/cm² | 120 | 120 | 120 | 150 |
| Time of ultraviolet irradiation treatment /min | 25 | 30 | 30 | 30 |
| Temperature of nucleation treatment / °C | 500 °C | 500 °C | 500 °C | 500 °C |
| Time of nucleation treatment /min | 180 min | 180 min | 180 min | 180 min |
| Temperature of crystallization treatment / °C | 590 °C | 590 °C | 590 °C | 590 °C |
| Time of crystallization treatment /min | 100 min | 100 min | 100 min | 100 min |
| Transmittance T₁ of exposure area (850nm) | 2.51 | 1.25 | 0.51 | 0.26 |
| Transmittance T₂ of exposure area (550nm) | 0.00 | 0.00 | 0.00 | 0.00 |
| Transmittance T₃ of non-exposure area (850nm) | 92.32 | 92.15 | 91.92 | 92.28 |
| Transmittance T₄ of non-exposure area (550nm) | 91.47 | 92.08 | 91.49 | 91.66 |
| Cross-sectional shape of black ring | Slightly curved | Slightly curved | Slightly curved | Slightly curved |
| Presence of blurring at the edges | No | No | No | No |

**Table 2**

| Composition (wt%) | Comparative Example 1 | Comparative Example 2 | Comparative Example 3 | Comparative Example 4 |
|---|---|---|---|---|
| SiO₂ | 72.40 | 72.40 | 72.40 | 72.40 |
| Al₂O₃ | 5.87 | 5.87 | 5.87 | 5.87 |
| Li₂O | 9.80 | 9.80 | 9.80 | 9.80 |
| Na₂O | 2.84 | 2.84 | 2.84 | 2.84 |
| K₂O | 2.34 | 2.34 | 2.34 | 2.34 |
| ZrO₂ | 5.77 | 5.77 | 5.77 | 5.77 |
| Ag₂O | 0.43 | 0.43 | 0.43 | 0.43 |
| CeO₂ | 0.12 | 0.12 | 0.12 | 0.12 |
| Sb₂O₃ | 0.43 | 0.43 | 0.43 | 0.43 |
| Total | 100.00 | 100.00 | 100.00 | 100.00 |
| Masking treatment | Masking ink on single side | Mask on single side | Masking ink on both sides | Masking ink on both sides |
| Area of ultraviolet irradiation | Irradiation on single side | Irradiation on single side | Irradiation on both sides | Irradiation on both sides |
| Intensity of ultraviolet irradiation treatment mW/cm² | 120 | 120 | 120 | 20 |
| Time of ultraviolet irradiation treatment /min | 30 | 30 | 5 | 30 |
| Temperature of nucleation treatment/ °C | 500 °C | 500 °C | 500 °C | 500 °C |
| Time of nucleation treatment /min | 180 min | 180 min | 180 min | 180 min |
| Temperature of crystallization treatment/ °C | 590 °C | 590 °C | 590 °C | 590 °C |
| Time of crystallization treatment/min | 100 min | 100 min | 100 min | 100 min |
| Transmittance T₁ of exposure area (850nm) | 5.32 | 5.88 | 16.5 | 12.8 |
| Transmittance T₂ of exposure area (550nm) | 0.00 | 0.00 | 1.35 | 0.9 |
| Transmittance T₃ of non-exposure area (850nm) | 91.48 | 91.76 | 91.89 | 91.78 |
| Transmittance T₄ of non-exposure area (550nm) | 91.36 | 91.38 | 91.75 | 91.39 |
| Cross-sectional shape of black ring | Trapezoidal | Trapezoidal | Hollow | Hollow |
| Presence of blurring at the edges | Yes | Yes | No | No |

Based on the comparison between Example 3 and Comparative Examples 1-4, it can be seen that performing ultraviolet irradiation treatment on both main surfaces in the present disclosure can solve the problem of edge blurring phenomenon appearing at the edges of the exposed area of the photosensitive glass. Furthermore, the present disclosure can control the light-shielding performance of the exposed area of the photosensitive glass by controlling the conditions of the ultraviolet irradiation treatment.

The above are only specific embodiments of the present disclosure and are not intended to limit the present disclosure. For those skilled in the art, the present disclosure may have various modifications and changes. Any modifications, equivalent substitutions, improvements, etc., made within the spirit and principles of the present disclosure shall be comprised within the protection scope of the present disclosure.

### Industrial Applicability

In summary, the present disclosure provides a preparation method for a photosensitive glass, which can achieve the mitigation of the edge blurring phenomenon at the edges of the exposed area of the photosensitive glass while simultaneously ensuring that the exposed area has good light-shielding performance.

## Claims

1. A preparation method for a photosensitive glass, comprising:
obtaining a substrate glass;
the substrate glass comprises a first area and a second area, performing masking treatment on both opposite main surfaces of the first area, and not performing masking treatment on the second area, to obtain a both sided-masked substrate glass with an identical structure; and
performing radiation treatment on both main surfaces of the both sided-masked substrate glass with the identical structure, and subsequently performing heat treatment, to obtain the photosensitive glass having a non-exposed area and an exposed area; wherein the non-exposed area corresponds to the first area, and the exposed area corresponds to the second area.

2. The preparation method according to claim 1, wherein the radiation treatment comprises ultraviolet irradiation treatment.

3. The preparation method according to claim 2, wherein a wavelength of the ultraviolet irradiation treatment is 300 nm to 320 nm, an intensity of the ultraviolet irradiation treatment is 20 mW/cm² to 360 mW/cm², and a time of the ultraviolet irradiation treatment is 5 min to 60 min.

4. The preparation method according to any one of claims 1 to 3, wherein the masking treatment comprises masking using a masking ink and/or a mask.

5. The preparation method according to any one of claims 1 to 4, wherein the heat treatment comprises nucleation treatment and crystallization treatment.

6. The preparation method according to claim 5, wherein a heating rate of the nucleation treatment is 1 °C/min to 10 °C/min; and/or,
a temperature of the nucleation treatment is 450 °C to 590 °C; and/or,
a time of the nucleation treatment is 30 min to 240 min; and/or,
a heating rate of the crystallization treatment is 1 °C/min to 10 °C/min; and/or,
a temperature of the crystallization treatment is higher than that of the nucleation treatment, and the temperature of the crystallization treatment is 590 °C to 800 °C; and/or,
a time of the crystallization treatment is 30 min to 360 min.

7. The preparation method according to any one of claims 1 to 6, wherein the substrate glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.18%, and Sb₂O₃: 0.05% to 0.51%, based on a mass percentage of oxides;
wherein X is Ag, Cu, Au, Bi and/or the oxides thereof.

8. The preparation method according to any one of claims 1 to 7, wherein the photosensitive glass comprises: SiO₂: 65.00% to 75.00%, Al₂O₃: 5.00% to 10.00%, Li₂O: 7.00% to 13.00%, Na₂O: 2.00% to 4.00%, K₂O: 2.00% to 4.00%, ZrO₂: 5.00% to 7.00%, X: 0.05% to 0.80%, CeO₂: 0.05% to 0.18%, and Sb₂O₃: 0.05% to 0.51%, based on the mass percentage of oxides;
wherein X is Ag, Cu, Au, Bi and/or the oxides thereof.

9. A photosensitive glass prepared by the preparation method according to any one of claims 1 to 8.

10. The photosensitive glass according to claim 9, wherein, when a thickness of the photosensitive glass is 0.40 mm to 1.00 mm, a transmittance T₁ of the exposed area of the photosensitive glass at a wavelength of 850 nm is 0.00% to 5.00%, preferably the transmittance T₁ is 0.00% to 3.00%; and/or,
when the thickness of the photosensitive glass is 0.40 mm to 1.00 mm, a transmittance T₂ of the exposed area of the photosensitive glass at a wavelength of 550 nm is 0.00% to 5.00%, preferably the transmittance T₂ is 0.00% to 2.00%; and/or,
when the thickness of the photosensitive glass is 0.40 mm to 1.00 mm, a transmittance T₃ of the non-exposed area of the photosensitive glass at a wavelength of 850 nm is greater than or equal to 90%; and/or,
when the thickness of the photosensitive glass is 0.40 mm to 1.00 mm, a transmittance T₄ of the non-exposed area of the photosensitive glass at a wavelength of 550 nm is greater than or equal to 90%.

11. A cover plate glass, comprising the photosensitive glass according to any one of claims 9 to 10.

12. An electronic device, comprising the photosensitive glass according to any one of claims 9 to 10.

13. The electronic device according to claim 12, wherein the electronic device comprises a housing, and the housing comprises the photosensitive glass according to any one of claims 9 to 10.

14. The electronic device according to claim 13, wherein the electronic device further comprises a camera component, the housing comprises a camera protection cover plate, the camera protection cover plate is disposed over the camera component, and the camera protection cover plate comprises the photosensitive glass according to any one of claims 9 to 10.

15. Use of the photosensitive glass according to any one of claims 9 to 10 in a component for a mobile phone, a smartwatch, a wearable device, a camera module, or a vehicle.
